# EUROPEAN PATENT APPLICATION

(11) **EP 3 154 249 A1**
(43) Date of publication of application: **12.04.2017**
(21) Application number: 15802549.4
(22) Date of filing: 26.05.2015
(51) Int. Cl.: H04N 1/10, G06K 9/20, G06T 1/00, G09F 9/00, H04N 1/00, H04N 1/107

(54) **IMAGE READING DEVICE**

(30) Priority: 06.06.2014 JP 2014117731
(71) Applicant: Toppan Printing Co., Ltd., Taito-ku, Tokyo 110-0016 (JP)
(72) Inventor: MORIKAWA, Noriko, Tokyo 110-0016 (JP); SHIRASAKI, Tomoyuki, Tokyo 110-0016 (JP)
(74) Representative: Cabinet Plasseraud
(86) International application number: PCT/JP2015/002650
(87) International publication number: WO 2015/186312

(57) **Abstract**

There is provided an input/output-integrated image reading device that is thin and easy to carry, recognizes text and images with high accuracy, and enables instantaneous and real-time comparison of a read image with a conversion result, such as translation. An image reading device (101) is provided with an image data reading unit (202) that reads an original document, a recognition unit (201) that recognizes text or images on the read original document, a conversion unit (201) that converts display information of read text or images, and a displaying unit (204) that displays display information of text or images that have been subjected to the conversion processing. The image data reading unit (202) and the displaying unit (204) are each in a sheet-like shape, and the device is overall in a sheet-like shape.

## Description

### [Technical Field]

The present invention relates to an image reading device that reads and displays images including text shown on a medium to be read such as paper.

### [Background Art]

Image reading devices read images or text on media to be read such as paper (hereinafter, also referred to as an original document) on which the text and images are shown. Some image reading devices recognize text or images which are read by an optical character reader (OCR), and display the read text or images by executing predetermined processing (see PTLs 1, 2 and 3).

In recent years, as a result of advances in techniques for reading text in image data, languages can be translated by character recognition processing along with a technique of syntax analysis or the like. Generally, in translation processing, an original image is read by an image scanner, and then subjected to preprocessing such as contour correction or contrast correction as needed, which is followed by character recognition, syntax analysis and translation in this order. Thus, translation devices and translation applications have been developed. Translation devices are a combination of a scanner, as an image reader, and a facsimile. The translation applications display an image read by a smartphone camera simultaneously with a translation result from the image data on the smartphone display. An input/output-integrated image reading device, which is provided with both an image reader that reads images, and a display capable of displaying the read image data, the translation result, and the like, is very useful since it enables user to confirm the original document and the translation result and the like in real time.

In recent years, with the development of high-speed communication networks, highly advanced arithmetic processing, such as preprocessing of image data, character recognition and syntax analysis/translation, can be achieved through cloud computing on a network. Thus, the input/output-integrated image reading device having a network interface and residing in a communication environment can provide a high quality translation service in real time without the need of executing advanced processing or having a large memory.

### [Citation List]

### [Patent Literature]

[PTL 1] JP-A-2003-008843
[PTL 2] JP-B-3234736
[PTL 3] JP-A-H04-245767

### [Summary of the Invention]

### [Technical Problem]

However, reading devices, such as facsimiles and scanners, typically use a linear image sensor and a two-dimensional image sensor. Since these sensors adopt an optical system utilizing a lens or a mirror, and mechanical scanning, the size of the reading device becomes too large and is inconvenient for carrying. For the same reason, it is difficult to reduce the thickness of the device. For these reasons, reading devices, such as facsimiles and scanners, are not suitable for curved-surface reading, and it is difficult to make the devices flexible.

On the other hand, smartphones, tablet terminals and the like use a camera as a reading device. Such a camera requires only a short time for capturing an image, and can also capture text and images on a curved surface. The thickness of the terminals can be reduced to some degree. However, in capturing an image with such a camera, image blur due to defocusing and vibration easily occurs, and the accuracy of recognizing text and images is reduced. Such a camera requires optimum exposure condition settings to environmental illuminance (diaphragm and shutter speed), and suffers from a problem that the imaging device is likely to cast its shadow and lighting is likely to be reflected when images on a document are read in an indoor environment. When captured images are simultaneously displayed on a display in real time and compared with images (e.g. translation results) obtained by executing predetermined conversion processing to the text and image information read from the captured images, tablet terminals and the like are not convenient for large scale reading since users are required to fix the terminals by holding them by hand, for example, during image capturing.

The present invention has been made in light of the above circumstances, and has an object to provide a thin input/output-integrated image reading device easy to carry.

### [Solution to Problem]

An image reading device according to one aspect of the present invention is characterized in that the image reading device includes an image data reading unit that reads an image on a medium to be read, and a display unit capable of displaying at least one of an image data read by the image data reading unit and display information that has been subjected to conversion processing. In the image reading device, the image data reading unit and the displaying unit are each in a sheet-like shape, and the device is overall in the sheet-like shape.

### [Advantageous Effects of the Invention]

According to one aspect of the present invention, a thin and easy-to-carry image reading device can be provided if the device is of an input/output-integrated type.

### [Brief Description of the Drawings]

Fig. 1 is a schematic diagram of an image reading device according to an embodiment of the present invention.
Fig. 2 is an enlarged perspective view of the image sensor array according to the embodiment of the present invention.
Fig. 3 is a cross sectional view of the image reading device according to the embodiment of the present invention.
Fig. 4 is a hardware block diagram of the image reading device according to the embodiment of the present invention.
Fig. 5 is a flow diagram of the operation of the image reading device according to the embodiment of the present invention.
Fig. 6 is a functional block diagram of the image reading device according to the embodiment of the present invention.

### [Description of the Embodiment]

### <Embodiment>

Hereinafter, with reference to the drawings, some embodiments of the present invention will be described.

### [General configuration]

The present embodiment will be described by way of an example of a 5-inch tablet-like image reading device.

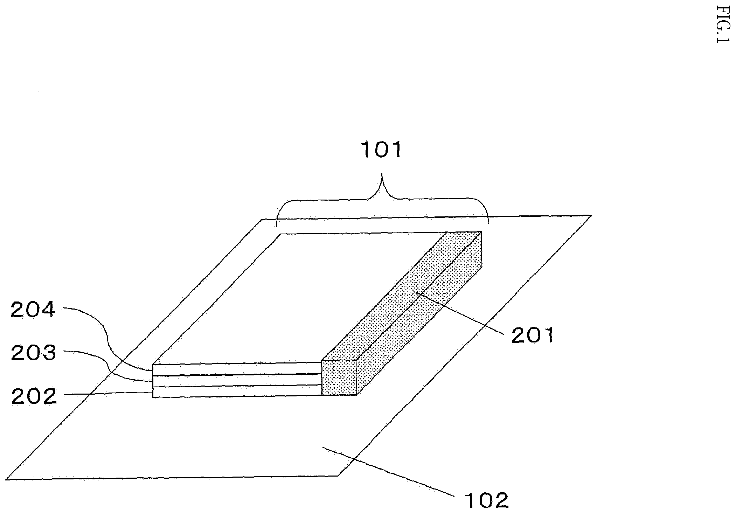

As shown in Fig. 1, an image reading device 101 according to the present embodiment is provided with an image data reading unit 202 that reads an original document, a main control unit 201 that executes predetermined processing on the image data read from the image data reading unit 202, a light source unit 203 that is used for image reading, and a display unit 204 capable of displaying display information (image data) of at least one of the read image data and image data obtained by executing conversion processing on the read image data.

As shown in Fig. 1, in the image reading device 101 of the present embodiment, the image data reading unit 202, the light source unit 203 and the display unit 204 are arranged in a laminated state, being overlapped in this order. The image data reading unit 202 and the display unit 204 are arranged face-to-face sandwiching and holding the light source unit 203 therebetween. When viewed from the laminating direction, the main control unit 201 is arranged at a lateral side of a layer that is formed by the image data reading unit 202, the light source unit 203 and the display unit 204. The main control unit 201, the image data reading unit 202, the light source unit 203 and the display unit 204 are assumed to be electrically connected.

In the light source unit 203, a surface light source capable of bilateral light emission may be used, or a surface light source which switches light emission from one surface to the other as necessary may be used. Further, in the light source unit 203, non-light emitting surfaces of one-sided light emission surface light sources may be arranged face to face, and individually driven.

### [Image data reading unit]

First, the image data reading unit 202 will be described.

In the present embodiment, the image reading unit 202 is in a sheet-like shape. As the sheet-like image data reading unit 202, an image sensor array can be used. Such an image sensor array has a photosensor structure including a plurality of photosensors arranged in a matrix pattern, and uses photodetector such as photodiodes or TFTs arranged in an array pattern. The image data reading unit 202 only needs to be in a sheet-like shape, and is not limited to this image sensor array.

### [Sheet-like shape]

The term "sheet-like shape" as used in the present embodiment refers to a planar body such as in a thin plate shape, and the thickness of the planar body is preferably 0.1mm or more to 30mm or less. The sheet-like body may be rigid or flexible.

### [Method of reading image]

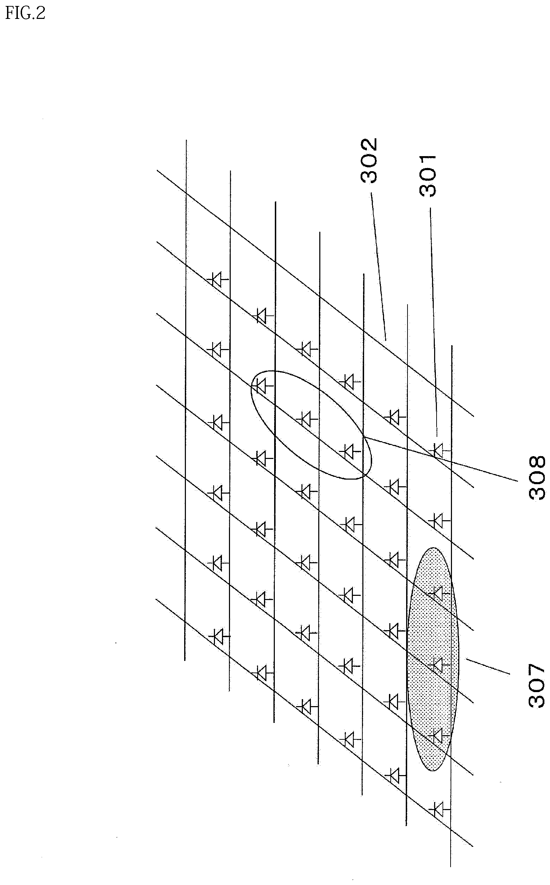

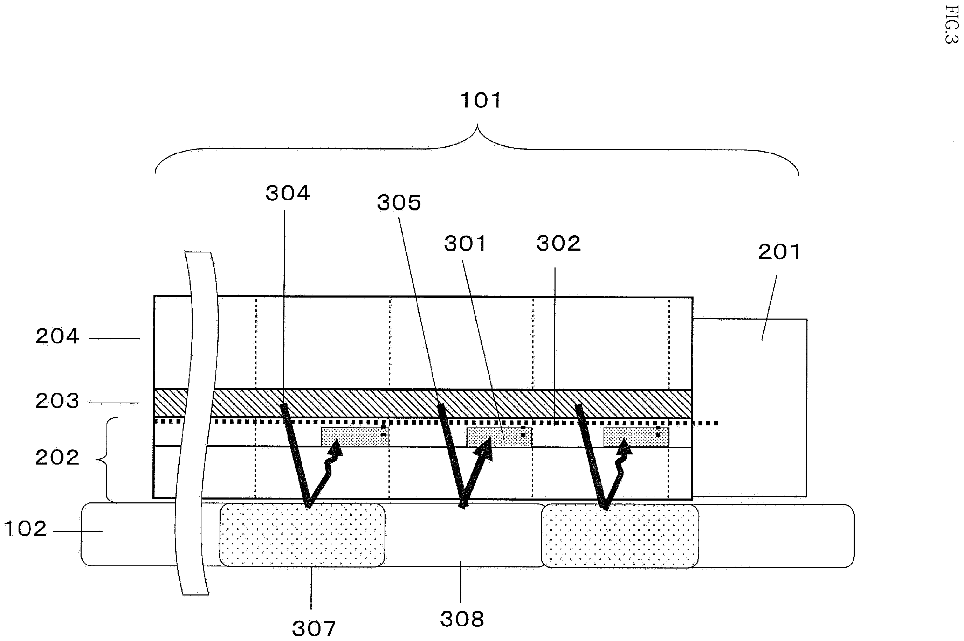

Fig. 2 is an enlarged perspective view of an image sensor array with photodiodes used as the photodetector. Fig. 3 is a cross sectional view of the image reading device.

An example of a method of reading an image will be described.

As shown in Fig. 2, in the image data reading unit 202 of the example, the photodiodes serving as the photodetectors 301 are arranged in a matrix pattern. The image data reading unit 202 is an image sensor array with a structure in which an electrode 302 is connected to an end of each of the photodiodes. Each of the photodiodes reads an original document positioned thereunder. That is, as shown in Fig. 3, in the image data reading unit 202, light is radiated from a light source unit 203 to an original document 102, and the reflected light is detected by the photodiodes. The intensity of the reflected light varies depending on the image on the original document positioned under the photodiodes.

As shown in Fig. 3, light 304 emitted from the light source unit 203 becomes weakly reflected light due to the presence of a low reflectivity portion 307 in the advancing direction. Also, light 305 emitted from the light source unit 203 becomes highly reflected light due to the presence of a high reflectivity portion 308 in the advancing direction.

The reflected light is incident on a light receiving surface of each of the photodiodes, and charge is generated in each of the photodiodes. The image data reading unit 202 can recognize the image on the original document on the basis of the difference in the amount of charge which is generated by the difference in intensity of the reflected light. Thus, the image data reading unit 202 detects currents generated by the photodiodes through the electrodes that are connected to the ends of the respective photodiodes, and the image located under the photodiode array is recognized as electrical signals.

Next, an image sensor array with TFTs used as the photodetectors 301 will be described.

When TFTs are used as the photodetectors, the mechanism of recognizing the image on the original document is the same as described above. When TFTs are used as the photodetectors, functions both as photodetectors and as electrodes and selection transistors can be exerted.

When TFTs are used as the photodetectors, photosensor cells (pixels) can be made small to thereby miniaturize the photosensor system or increase the density of the photosensor cells (achieve high definition of the pixels). A TFT structure which imparts a photosensor function to the TFTs therein includes, for example, a double gate structure provided with two gates, i.e. top and bottom gates. In the case of the double gate structure, there is an advantage that the detection sensitivity is higher as compared with other TFT structures. Materials for a semiconductor layer include, but are not specifically limited to in the present embodiment, an amorphous silicon or the like. Depending on the selection of the materials for forming TFTs, flexibility and transparency are imparted as well.

TFTs having flexibility include a substrate made of a film of a polymethyl methacrylate, a polyacrylate, a polycarbonate, a polystyrene, a polyethylene terephthalate, a polyethylene naphthalate, or a glass fiber-reinforced acrylic resin or a glass fiber-reinforced polycarbonate, a polyimide, a fluorine resin and thin glass, and a semiconductor active layer made of an organic material such as a pentacene, an anthracene or a rubrene. However, the present invention is not limited to these materials.

TFTs having transparency include a semiconductor active layer made of a metal oxide semiconductor material such as a zinc oxide (ZnO), an indium oxide (In₂O₃), an indium zinc oxide (In-Zn-O), a tin oxide (SnO₂) or tungsten oxide (WO), and the wiring made of a transparent conductive material such as an indium tin oxide (ITO) or indium zinc oxide (IZO). However, the present invention is not limited to these materials.

As shown in Fig. 3, an image is read in the image data reading unit 202 in a state where the image data reading unit 202 and the original document are intimately in contact with each other or close to each other. At this time, the image on the original document can accurately be read at the same resolution as that of the photosensor cells (pixels) of the image sensor array. When an image data reading unit 202 having flexibility is used, the flexibility is imparted to the image data reading device 101. In this case, if the original document has a curved surface, the image reading device 101 can read the image with high accuracy by following the curved surface.

### [Light source unit]

Next, the light source unit 203 will be described.

As described above, the light source unit 203 serves as a light source when the image data reading unit 202 reads an image on the original document. In the present embodiment, the light source unit 203 is also in a sheet-like shape, and arranged on the image data reading unit 202.

When the image reading device 101 has transmission properties, external light may be used as the light source, and the image reading device 101 may be configured without including the light source unit 203. However, in a configuration including the light source 203, reflected light from the original document is stabilized because light can be more stably illuminated from the light source. Accordingly, this configuration is preferable because the reading accuracy of the image data reading unit 202 is improved. As shown in Figs. 1 and 3, the light source unit 203 is arranged adjacent to the image data reading unit 202, that is, located on a surface of the image data reading unit 202, the surface of the image data reading unit 202 being opposite to the original document reading surface thereof. As described above, the light from the light source unit 203 is reflected from the original document. The image data reading unit 202 of the present embodiment detects the reflected light and recognizes the image.

As a light source, an LED, an organic EL or an inorganic EL can be used, but the present embodiment is not limited to these light sources. The light source may be combined with a light guide plate. An organic EL or an inorganic EL is preferable because it is easily made flexible. When an organic EL uses a transparent electrode as an electrode, transmission properties can be imparted to the organic EL.

The color of the light source may be white or may be three colors of red (R), green (G) and blue (B). Use of three colors of RGB is preferable because color reading can be easily conducted. In the present embodiment, the color of the light source is not limited as long as an image can be recognized.

### [Display unit]

Next, the display unit 204 will be described. As shown in Figs. 1 and 3, the display unit 204 is arranged on the surface of the image data reading unit 202, the surface of the image data reading unit 202 being opposite to the original document reading surface thereof. When the image reading device 101 according to the present embodiment is provided with the light source unit 203, the display unit 204 is arranged on the light source unit 203. The display unit 204 of the present embodiment is in a sheet-like shape, and arranged on the light source unit 203. The display unit 204 displays display information including the image data of the image read by the image data reading unit 202 or the image data of the read image that has been subjected to predetermined conversion processing in the main control unit 201.

The display unit 204 includes a liquid crystal display, an electronic paper display or an organic EL display, but the display unit of the present embodiment is not limited to these displays. Display may be black-and-white display or colored display. When a liquid crystal display is used, transmission properties can be imparted to the image reading device 101 by using a transmissive liquid crystal display. When an electronic paper display is used, flexibility can be imparted to the display, and power consumption can be reduced, which is preferable. When an organic EL display is used, transmission properties or flexibility can be imparted to the display, which is preferable.

The display unit 204 may be provided with a touch panel. Touch panels include resistive type touch panels, capacitive type touch panels, and the like, but any type of the touch panel may be used. When the display unit 204 is provided with a touch panel, the user can identify coordinates of an image, while viewing the image displayed on the display unit 204 to facilitate extracting the object image.

### [Combination]

In the present embodiment, several configurations are considered that can be used as the image data reading unit 202, the light source 203 and the display unit 204, but any configuration may be used. Transmission properties or flexibility, black-and-white or colored display, and the like can be selected depending on the specification of the image reading device.

### [Transmission]

The term "transmission" as used in the present embodiment refers to transmission properties to an extent enabling recognition of text and images when the original document is viewed through the device. When transmittance is 50% or more, text and images on the original document can be recognized through the image reading device 101 according to the present embodiment. When the device has transmission properties, the transmission properties are not limited to "transparency" and "translucency", but include a fine arrangement of transmissive and intransmissive portions.

### [Hardware block diagram]

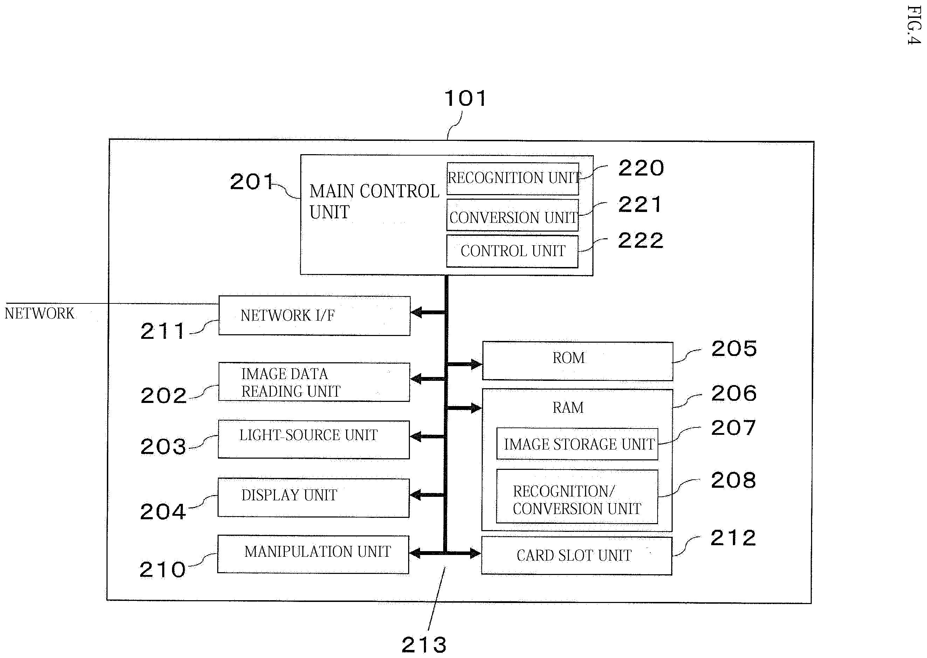

Next, with reference to Fig. 4, the configuration of the image reading device 101 according to the present embodiment will be described. Fig. 4 is a hardware block diagram of the image reading device according to the embodiment.

The image reading device 101 is provided with the image data reading unit 202 that optically reads and converts text or images (hereinafter, collectively referred to as image) on the original document into an electrical signal, the light source unit 203 used when reading an image, the main control unit 201 that constructs image data from a digital signal outputted from the image data reading unit 202 and executes predetermined processing, and the display unit 204 that displays the read image or the image that has been subjected to predetermined processing or the like. The main control unit 201 is a CPU, or the like. In Fig. 4, the reference sign 213 indicates a bus. The bus 213 electrically connects various functional units to each other to transfer data or the like.

The image reading device 101 is provided with a ROM 205 and a RAM 206 as storage devices. The ROM 205 is a nonvolatile memory that stores basic information, such as programs. The RAM 206 is a volatile memory, i.e. a working memory from which the main control unit 201 reads programs and data for execution. In practice, the RAM 206 may be a flash memory. The RAM 206 is provided with an image storage unit 207 and a recognition/conversion result storage unit 208. The image storage unit 207 stores various pieces of image information including the read image or the image data that has been subjected to predetermined conversion processing or the like. The recognition/conversion result storage unit 208 stores information including text information or the like recognized from the image data that is stored in the image storage unit 207, or conversion information that has been subjected to predetermined processing.

The image reading device 101 may be provided with a manipulation unit 210 for receiving inputs of various pieces of information. The manipulation unit 210 is provided with buttons, keys or the like. When a unit having a voice input function is provided as the manipulation unit 210, the various pieces of information may be inputted by voice input. The voice input unit is a microphone or the like. Although not shown, the image reading device 101 may be provided with a unit having a voice output function. The voice output unit is a speaker, or the like. For example, an image may be read following the voice instructions from the voice output unit, or an image may be manipulated or inputted, for example, by the manipulation unit 210. Alternatively, text or numerical data or the like included in a read image, or display contents of the display unit 204 may be read out by voice.

The image reading device may be provided with a network I/F (interface) 211 to be connected to a network. All or part of data processing except for image reading and image display can also be conducted by a computer on the network via the I/F.

The image reading device 101 may be provided with a card slot unit 212. When the card slot unit 212 is provided, a card memory inserted in the card slot unit 212 can serve as the image storage unit 207 or the recognition/conversion result storage unit 208. Also, the card memory can serve as a storage unit of various data such as image data, text data and output data used in a recognition part 220 or a conversion unit 221, which will be described later.

When the image reading device 101 is overall in a sheet-like shape, an external device which can be connected to the image reading device 101 by a cable or the like may include the ROM 205, the RAM 206, the manipulation unit 210, the network I/F 211, the card slot unit 212 and the voice output unit, not shown. In this case, the external device which is connected to the image reading device 101 for integral use should be part of the image reading device 101.

The main control unit 201 is provided with the recognition unit 220 and the conversion unit 221. The main control unit 201 is provided with the image data reading device 202 and a control unit 222 capable of driving the display unit 204.

The recognition unit 220 extracts display information of at least text or image information on an original document, from the image data read by the image data reading unit 202.

The conversion unit 221 performs conversion of display information extracted by the recognition unit 220.

The manipulation unit 210 configures a display information extracting unit for the user to select display information which is subjected to conversion in the conversion unit 221.

### [Functional block diagram]

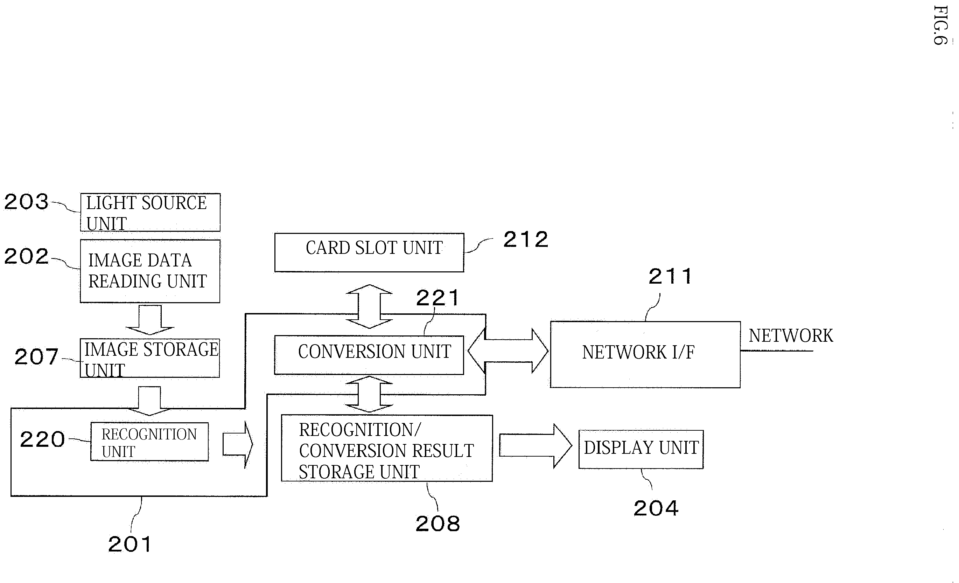

Hereinafter, with reference to Fig. 6, the function of the image reading device 101 will be described. Fig. 6 is a functional block diagram of the image reading device 101 according to the forgoing embodiment. First, the function of the main control unit 201 will be described.

The image data of the image read by the image data reading unit 202 is stored in the image storage unit 207.

The recognition unit 220 provided to the main control unit 201 extracts display information that is made up of at least text or image information from the image data stored in the image storage unit 207 to recognize the display information. Since a method that can be used for recognizing image data as text data may be an existing method used such as in OCR, the description is omitted. The recognition unit 220 stores the recognized result in the recognition/conversion result storage unit 208.

The conversion unit 221 included in the main control unit 201 conversion-processes the read image or the recognized result stored in the recognition/conversion result storage unit 208. The conversion processing can include, for example, translation, conversion from Japanese kanji characters into Japanese kana characters, or enlargement/reduction. The conversion unit 221 stores the converted result in the recognition/conversion result storage unit 208.

The display information of image or text data and various data, such as output data, for use in recognition and conversion in the recognition unit 220 or the conversion unit 221, may be stored in advance in the ROM 205 or the card memory inserted to the card slot unit 212, or data stored on the internet via the network I/F 211 may be used.

The manipulation unit 210 sends various manipulation signals such as for reading an image or executing predetermined processing. When the display unit 204 includes a touch panel, various manipulation signals may be transmitted through the touch panel. In this case, the touch panel serves as the manipulation unit 210.

### [Operation flow diagram]

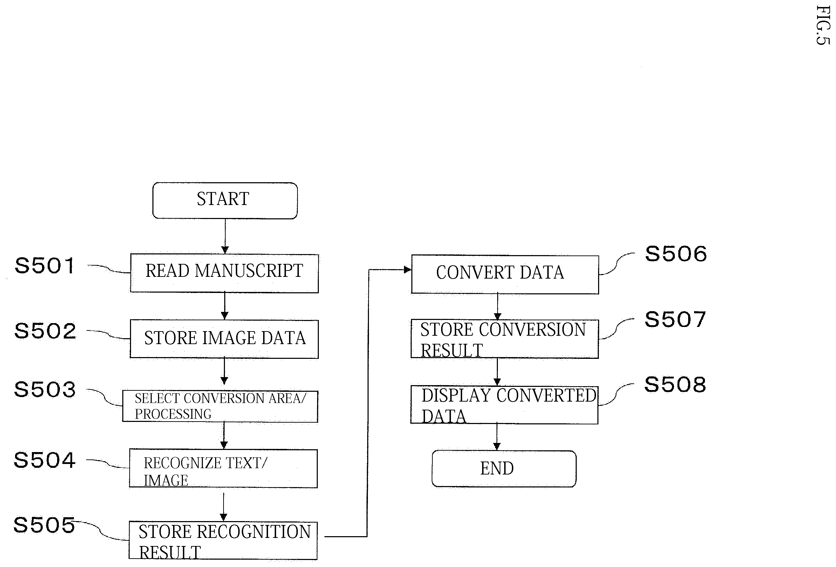

Next, with reference to Fig. 5, an operation of the image reading device 101 of reading an image, followed by predetermined processing to display the image to the displaying unit 204 will be described. Fig. 5 is a flow diagram of the operation of the image reading device according to the embodiment.

First, the image reading device 101 reads an original document with the image data reading unit 202 (step S501). Then, the image data that has been read by the image data reading unit 202 is stored in the image storage unit 207 (step S502).

Next, the image reading device 101 proceeds to step 503 that executes selected processing to a selected area of the image data. For example, in the case of text recognition, processing executed to an image data includes processing, such as contrast or contour correction, conducted before OCR. The description herein sets forth the case of realizing a translation function as an example of the processing, but the present embodiment is not limited to this processing.

First, in the image reading device 101, the user selects an area of the read image and processing to be executed on the selected area (step S503). Then, the image reading device 101 recognizes text information of the selected area of the image stored in the image storage unit 207 by using the recognition unit 220 which is an OCR function of the main control unit 201 (step S504). Then, the recognized text information is stored in the recognition/conversion result storage unit 208 (step S505). Then, the image reading device 101 converts the recognized text information into data by using the conversion unit 221 which is a translation function of the main control unit 201 (step S506). Then, the converted data is stored in the recognition/conversion result storage unit 208 (step S507).

Then, the converted data is displayed at a predetermined position of the display unit 204 (step S508).

Thus, the image reading device 101 can execute predetermined processing on the read image, and display the processed image. The user can easily convert an original document into a format convenient for the user to recognize the original document in real time.

Since the image can be saved in the image storage unit 207, the user can call up an original image and the image that has been subjected to the predetermined processing any time to thereby confirm the image by conducting the operation flow shown in Fig. 5 from the middle.

### [Advantageous Effects of the Embodiment]

According to the present embodiment, the following advantageous effects are achieved.

The image reading device according to the present embodiment is obtained by integrally forming an image data reading unit that reads an original document, a recognition unit that recognizes text or image on the read original document and a conversion unit that executes predetermined processing to the recognized text or image information. Consequently, the image that has been subjected to predetermined processing can be viewed concurrently with image reading to instantaneously read in Japanese an original document written in English, for example.

When a sheet-like image data reading unit is used as an image data reading unit, the entire input/output-integrated image reading device (hereinafter, referred to terminal) can be made thinner. When photodiodes or TFT (thin film transistor) array are used as the image data reading unit, the image of a predetermined area is ensured to be instantaneously captured without blurring. Accordingly, it is possible to provide a thin and easy-to-carry terminal, with high recognition accuracy of text or images, and allowing the user's instantaneous and real-time comparison of a read image with the conversion results, such as the translation.

The user can use such an image reading device to enable the terminal to easily capture text or images, or to enable the user's real-time recognition in their mother tongue of an original document written in a foreign language.

### <Second Embodiment>

In the second embodiment, processing after acquiring an image as a digital data is executed by an externally connected device through a network I/F 211. The external device may be an individually connected device, or a network-connected device on a cloud. In this case, the form of data transmitted to the external device by the reading device may be digitized raw image data, data that has been subjected to preprocessing such as contrast or contour correction, or data further converted into character data such as text after the preprocessing. The image reading device and the computer in the cloud can share, as needed, the subsequent processing of digitized raw image data.

### [Advantageous Effects of the Second Embodiment]

Since the acquired digital raw data is processed by the external device, resources of the main body can be reduced, and the size and cost can also be reduced. Also, since a high-performance processor in the cloud executes highly advanced arithmetic processing, high-quality results can be displayed with high accuracy.

Priority is claimed from Japanese Patent Application No. 2014-117731 (filed June 6, 2014), the entire contents of which are incorporated herein by reference as a part of this application.

The present invention has been described with reference to a limited number of embodiments. However, the scope of rights of the present invention should not be construed as being limited to these embodiments, but modifications of the embodiments based on the above disclosure would be obvious to those skilled in the art.

### [Reference Signs List]

- 101:: Image reading device
- 102:: Original document
- 201:: Main control unit
- 202:: Image data reading unit
- 203:: Light source unit
- 204:: Display unit
- 205:: ROM
- 206:: RAM
- 207:: Image storage unit
- 208:: Recognition/conversion result storage unit
- 209:: A/D conversion unit
- 210:: Manipulation unit
- 211:: Network I/F
- 212:: Card slot unit
- 220:: Recognition unit
- 221:: Conversion unit
- 222:: Control unit

## Claims

1. An image reading device **characterized in that** the device comprises an image data reading unit that reads an image on a medium to be read, and a display unit capable of displaying at least one of an image data read by the image data reading unit and display information that has been subjected to conversion processing, wherein:
the image data reading unit and the displaying unit are each in a sheet-like shape, and the device is overall in the sheet-like shape.

2. The image reading device according to claim 1, **characterized in that**:
the sheet-like image data reading unit and the sheet-like displaying unit are arranged being laminated with each other; and
when viewed from the laminating direction, a control unit that drives the image data reading unit and the displaying unit is arranged at a lateral side of the image data reading unit and the displaying unit laminated with each other.

3. The image reading device according to claim 1 or 2, **characterized in that** the device includes a recognition unit that extracts display information from the image data read by the image data reading unit, the display information being made up of at least one of text information and image information on the media to be read.

4. The image reading device according to claim 3, **characterized in that** the device includes a conversion unit that converts display information extracted from the recognition unit.

5. The image reading device according to claim 4, **characterized in that** the device includes a display information extracting unit for a user to select display information to be subjected to conversion processing in the conversion unit.

6. The image reading device according to claim 5, **characterized in that**:
the displaying unit includes a touch panel; and
the display information extracting unit extracts display information to be subjected to the conversion processing, through the touch panel.

7. The image reading device according to any one of claims 4 to 6, **characterized in that** the conversion processing comprises any of translation, conversion from Japanese kanji characters into Japanese kana characters, and enlargement/reduction.

8. The image reading device according to any one of claims 1 to 7, **characterized in that** the image data reading unit and the displaying unit have transmission properties.

9. The image reading device according to any one of claims 1 to 8, **characterized in that** the image data reading unit and the displaying unit have flexibility.

10. The image reading device according to any one of claims 1 to 9, **characterized in that**:
the image data reading device has a photosensor structure that includes a plurality of photosensors arranged in a matrix pattern, and uses a thin film semiconductor as a photodetector; and
the displaying unit is any of a liquid crystal display, an electronic paper display and an organic EL display.

11. The image reading device according to any one of claims 1 to 10, **characterized in that**:
the device further comprises a light source unit that serves as a light source, the light source unit being located between the image data reading unit and the displaying unit; and
the light source unit is any of a light source unit using an LED and a light guide panel, a light source unit using an organic EL, and a light source unit using an inorganic EL.

12. The image reading device according to any one of claims 1 to 11, **characterized in that** the device further comprises at least one of a communication function, a card slot, a voice output function and a memory function.
